# FASCICULE DE BREVET EUROPEEN

(11) **EP 3 138 184 B1**
(45) Date de publication et mention de la délivrance du brevet: **21.04.2021**
(21) Numéro de dépôt: 15723274.5
(22) Date de dépôt: 28.04.2015
(51) Int. Cl.: H02K 3/12, H02K 3/28, H02K 15/06

(54) **STATOR DE MACHINE ELECTRIQUE TOURNANTE MUNI D'UN BOBINAGE OPTIMISE**
MIT EINER OPTIMIERTEN WICKLUNG AUSGESTATTETER STATOR EINER ELEKTRISCHEN ROTIERENDEN MASCHINE
ROTARY ELECTRIC MACHINE STATOR FITTED WITH OPTIMIZED COIL

(30) Priorité: 29.04.2014 FR 1453874
(43) Date de publication de la demande: 08.03.2017
(73) Titulaire: SKYAZUR, Wasquehal 59290 (FR)
(72) Inventeur: LANGLARD, Nicolas, 59120 Loos (FR)
(74) Mandataire: Rifflart, David Franck
(86) Numéro de dépôt international: PCT/FR2015/051159
(87) Numéro de publication internationale: WO 2015/166188

(56) Documents cités:
- WO-A2-02/50977
- DE-B- 1 026 841
- US-A- 5 196 752
- US-A- 5 477 095
- US-A- 5 804 902
- US-A1- 2004 046 475
- US-B1- 7 071 807

## Description

La présente invention concerne un stator de machine électrique tournante, laquelle peut fonctionner en moteur ou en générateur. Une application particulière concerne les alternateurs dans le domaine automobile. D'autres applications sont toutefois envisageables, par exemple les génératrices dans le domaine éolien. Les objectifs principaux de l'invention sont d'optimiser le rendement de la machine et son coût de fabrication.

Tel que cela est connu, un stator comprend un corps, également appelé noyau, qui est composé d'un paquet de tôles en acier et qui comporte des encoches. Les encoches sont par exemple de forme longitudinale parallèle à l'axe du corps, ledit axe étant confondu avec l'axe de rotation du rotor de la machine électrique tournante. Ces encoches s'étendent radialement de manière circonférentielle autour du corps et sont séparées entre elles par des dents. Les dents peuvent comprendre chacune à leur extrémité radiale, un pied-de - dents qui s'étend de manière circonférentielle de chaque côté de ladite dent en sorte de refermer partiellement et respectivement les deux encoches attenantes à cette dent.

Le stator comprend en outre un bobinage polyphasé constitué de plusieurs enroulements de spires disposés par couches dans les encoches; au moins un enroulement par phase sur chaque couche, lesdites phases étant raccordées entre elles. Par exemple, le stator peut comprendre trois phases raccordées en triangle ou en étoile, chaque phase comprenant deux enroulements raccordés en série ou en parallèle. Chaque enroulement comprend des branches montées chacune dans une encoche, ces branches étant connectées entre elles, à l'extérieur d'un premier côté longitudinal du corps du stator, par des têtes de liaison, en sorte de former un premier chignon et, à l'extérieur d'un second côté longitudinal dudit corps, par des pieds de raccordement, en sorte de former un second chignon. Ces premier et second chignons permettent le refroidissement du bobinage. Un isolant d'encoche, par exemple constitué d'une résine ou d'une feuille de papier, revêt les encoches en sorte de les séparer physiquement des branches des enroulements du bobinage.

Différentes conceptions de stators de machines électriques tournantes sont connues de l'homme du métier.

Selon une première conception des enroulements du bobinage, ceux-ci sont réalisés à partir de fils continus conducteurs électriques, par exemple en cuivre, qui sont revêtus d'un isolant tel que de l'émail. Une telle conception est par exemple décrite dans les demandes de brevet publiées sous les numéros FR 2 918 815 A1, FR 2 939 251 A1 et FR 2 779 883 A1, dans lesquelles les enroulements de fils continus sont réalisés de manière ondulée. La forme de la section transversale du fil peut être ronde ou rectangulaire, par exemple. Cette première conception des enroulements du bobinage présente divers inconvénients, selon les différentes mises en œuvre possibles du corps de stator.

En effet, lorsque le corps du stator est constitué d'une seule pièce, tel qu'illustré dans les documents FR 2 918 815 A1 et FR 2 939 251 A1, la continuité des fils nécessite d'engager radialement les enroulements dans les encoches; les fils subissent des contraintes durant leur mise en place, ce qui risque d'endommager le revêtement d'isolation et peut donc engendrer un court-circuit entre les fils du bobinage. En outre, il est nécessaire de limiter la taille des pieds de dents, voire de les supprimer, pour permettre l'introduction des fils dans les encoches, ce qui réduit l'échange électromagnétique entre le stator et le rotor de la machine. Les contraintes sont importantes lors de l'introduction des fils de cuivre dans les encoches en la présence de pieds-de-dents, ce qui nécessite de préserver une épaisseur suffisante de l'isolant d'encoche pour éviter un court-circuit éventuel entre le corps et le bobinage ; cette épaisseur d'isolant d'encoche réduit le taux de remplissage des encoches. Par ailleurs, il est nécessaire d'utiliser des cales de maintien des fils pour bloquer les passages entre les pieds-de-dents et éviter le dégagement de ces fils hors des encoches. Ces cales de maintien réduisent également le taux de remplissage des encoches. Par conséquent, ce taux de remplissage des encoches ne peut pas excéder un pourcentage de l'ordre de 60 %, ce qui limite le rendement de la machine.

Selon une variante de mise en œuvre du corps de stator, celle-ci est constituée de portions constituant chacune une dent, lesdites portions étant assemblées entre elles de manière circonférentielle pour former ledit corps avec ses encoches. Les fils des enroulements sont préalablement positionnés dans les zones correspondant aux encoches, avant la jonction des portions. Une telle conception apparaît par exemple dans le document FR 2 779 883 A1. Cette conception permet de positionner les fils dans les encoches sans contrainte, ce qui évite de les endommager et, donc, de générer des courts-circuits. Cette conception permet également un meilleur taux de remplissage des encoches, de l'ordre de 70%, et de conserver des pieds-de-dents de largeur optimale, ce qui améliore le rendement. Ce type de stator est cependant complexe à mettre en œuvre du fait que l'assemblage du corps doit être réalisé in situ. Cette conception nécessite en outre l'ajout de pièces de cerclage pour maintenir réunies les portions, ce qui complique également le procédé de fabrication du stator.

En outre, pour ce type d'enroulement constitué d'un fil continu, les entrées des phases ne peuvent pas être placées où l'on souhaite. Il est possible d'écarter ces entrées des phases pour certaines conceptions de bobinage, mais de manière bien définie. Pour d'autres conceptions de bobinage, la contrainte est plus grande puisqu'il est nécessaire de mettre toutes les entrées des phases ensemble, de manière compactée. Cela présente un inconvénient pour le raccordement des entrées des phases avec le pont de diodes permettant de redresser le courant en sortie d'alternateur.

Selon une seconde conception des enroulements du bobinage, celle-ci est mise en œuvre à partir de segments conducteurs en forme de U, également appelés des épingles, présentant deux branches connectées entre elles par une tête de liaison. Ces segments conducteurs sont par exemple en cuivre et revêtus d'un isolant, par exemple de l'émail, excepté au niveau des extrémités des branches. Les branches des conducteurs sont toutes introduites dans un sens longitudinal à l'intérieur des encoches en sorte de former les spires de chaque phase, sur plusieurs couches. Les têtes de liaison des segments conducteurs forment alors un premier chignon d'un premier côté du corps du stator. Les extrémités dénudées des branches sont déformées après leur passage au travers les encoches, ce qui permet de les connecter entre elles pour constituer les enroulements des phases. Les portions extrêmes déformées des branches connectées entre elles forment des pieds de raccordement et un second chignon du second côté du corps de stator. Les connexions entre les extrémités dénudées sont réalisées par soudure ou au moyens de manchons de connexion. La conception de ce type d'enroulement est par exemple décrite dans les demandes de brevet publiées sous les numéros FR 2 871 307 A1, FR 2 857 519 A1, FR 2 844 646 A1, FR 2 830 694 A1 et FR 2 819 117 A1. L'introduction des branches des segments conducteurs dans le sens longitudinal des encoches présente pour avantage de conserver la présence des pieds-de-dents, permettant un meilleur échange électromagnétique entre le stator et le rotor. Ce sens d'introduction des branches dans les encoches facilite en outre l'utilisation d'une section rectangulaire pour les segments conducteurs, ce qui permet un meilleur taux de remplissage des encoches, de l'ordre de 70%. La fabrication de ce type de stator est cependant complexe, puisqu'il convient de déformer les branches des conducteurs in situ après leur passage dans les encoches, afin de les connecter. La réalisation des soudures, in situ, nécessite en outre une extrême précision pour ne pas mettre en court-circuit les enroulements du bobinage. Ces soudures génèrent par ailleurs beaucoup de déchets de matière. Dans une variante, certaines fabrications prévoient des segments conducteurs préformés qui sont introduits radialement dans les encoches avant de souder les extrémités des branches dénudées qui sont connectées entre elles dans le premier chignon et dans le second chignon. Cette variante présente pour inconvénients de supprimer ou limiter les pieds-de-dents pour permettre ladite introduction et de doubler le nombre de soudures.

Selon une troisième conception d'enroulements du bobinage, décrite dans la demande de brevet FR 2 816 459 A1, ces enroulements sont réalisés au moyen de segments conducteurs en forme de U qui sont initialement dénudés. Des premiers segments conducteurs sont disposés dans un sens et des seconds segments conducteurs, de conception identique aux premiers, sont disposés en sens inverse. Ces premiers et seconds segments conducteurs sont disposés en quinconce, ce qui permet de connecter entre elles leurs branches attenantes respectives. Ces branches attenantes sont ensuite soudées entre elles, ce qui permet de former des unités de segments conducteurs, lesquelles sont ensuite revêtues d'un isolant de type émail. Des unités de segments conducteurs sont ensuite connectées entre elles pour constituer un enroulement de phase. Cette conception a pour but d'intercaler les unités de segments conducteurs afin d'améliorer les performances d'assemblage. Il n'empêche que les inconvénients mentionnés ci-dessus pour la première conception d'enroulements de bobinage, demeurent selon cette troisième conception. En effet, il convient d'insérer ces unités de segments conducteurs dans le sens radial des encoches, ce qui nécessite de réduire voire de supprimer les pieds-de-dents des encoches. De même, il convient d'utiliser des cales de maintien des enroulements à l'intérieur des encoches.

Il est également connu le brevet US 5,804,902 A qui décrit une machine électrique multi-phases dont les enroulements du bobinage sont mis en œuvre au moyen de segments conducteurs en forme de U. Initialement, ces segments présentent deux branches avec chacune une surface dénudée de contact, ce qui permet de joindre les surfaces dénudées des segments disposés successivement les uns à la suite des autres pour former un enroulement. Ces segments conducteurs sont ensuite soudés entre eux dans les zones de contact pour former l'enroulement, puis cet enroulement est revêtu d'un isolant. Les enroulements sont donc réalisés en amont de la phase d'assemblage avec le corps et, comme précédemment pour le mode de conception décrit dans la demande de brevet FR 2 779 883 A1, le corps du stator est nécessairement constitué de portions de corps formant chacune une dent, lesdites portions étant insérées autour des enroulements puis assemblées entre elles de manière circonférentielle pour former ledit corps avec ses encoches. Les inconvénients précités pour la demande de brevet FR 2 779 883 A1 apparaissent donc également avec une telle conception de machine électrique tournante.

Dans un tout autre domaine, sans aucune mesure avec les stators de machines électriques tournantes, le brevet US 7,071,807 B1 décrit un transformateur matriciel destiné à des circuits électroniques. Ce transformateur matriciel comprend corps magnétique constitué d'un ou plusieurs noyaux magnétiques distincts, recevant un seul enroulement primaire laminé. Dans une réalisation de cet enroulement primaire laminé, celui comprend deux parties en forme de U constituées chacune de plusieurs couches laminées en forme de U de longueurs progressives, lesdites couches étant superposées et isolées entre elles. Ainsi, les deux branches de chaque partie présentent des surfaces dénudées disposées en cascade. Ces deux parties en U sont insérées en vis-à-vis chacune d'un côté du noyau et les premières surfaces dénudées des branches de la première partie viennent en contact avec les secondes surfaces dénudées des branches de la seconde partie, ce qui permet de constituer l'enroulement primaire. Les premières et secondes surfaces dénudées sont étamées au moyen d'une pâte à souder avant d'être mises en contact, puis des moyens de clampage sont positionnés en dehors du corps magnétique, c'est-à-dire en dehors du noyau ou entre les noyaux distants les uns des autres, de sorte à maintenir provisoirement comprimer les premières et secondes surfaces dénudées entre elles. Après quoi, le transformateur est chauffé pour que la pâte à souder fusionne et assure la jonction entre les premières et secondes surfaces dénudées. Une telle mise en œuvre ne pourrait être envisagée sur un stator de machine électrique tournante dont les conceptions du corps monobloc avec encoches et du bobinage polyphasé sont sans comparaison avec celles du noyau magnétique et de l'enroulement primaire du transformateur matriciel. En outre, la conception du corps monobloc avec encoches et celle du bobinage polyphasé, dont les enroulements des spires sont insérés dans les encoches en faisant le tour du corps, nécessitent la présence de deux chignons, chacun d'un côté du corps, et de moyens de raccordement en triangle ou en étoile entre les phases du bobinage. Cela ne pourrait permettre la mise en place de moyens de clampage de chaque côté dudit corps monobloc pour maintenir provisoirement des surfaces dénudées venant en contact après avoir été préalablement étamées avec de la pâte à souder, le temps de permettre la cuisson du stator et la fusion de la pâte à souder.

La présente invention permet de pallier les inconvénients précités des diverses conceptions d'enroulement de bobinage des machines électriques tournantes, et vise à optimiser le rendement de la machine électrique tournante, le procédé de fabrication du stator et son coût de fabrication.

A cet effet, l'invention concerne un stator de machine électrique tournante tel que défini dans les revendications 1 à 12, un procédé de fabrication d'un tel stator tel que défini dans les revendications 13 et 14 et une machine électrique tournante de type moteur ou générateur, comprenant un tel stator.

Ainsi, la conception du stator selon l'invention permet une mise en place des premiers et seconds segments conducteurs dans les encoches en les introduisant dans le sens longitudinal desdites encoches. L'introduction des segments conducteurs dans le sens longitudinal permet de conserver des pieds-de-dents de dimensions optimales favorisant l'échange électromagnétique entre le stator et le rotor. Par ailleurs, les premiers et seconds segments entrent en contact et constituent un fil continu, simplement en les mettant en position dans les encoches, ce qui évite toute déformation desdits segments conducteurs après leur mise en place. Les moyens de maintien suppriment en outre toute soudure entre les segments conducteurs pour assurer la continuité de l'enroulement.

Ces moyens de maintien sont agencés directement dans les encoches, ce qui permet d'optimiser la pression exercée par ceux-ci au niveau des surfaces de contact entre les premières et secondes surfaces dénudées. En outre, cette disposition des moyens de maintien n'a aucune incidence sur l'encombrement et l'agencement des chignons, de même d'ailleurs sur l'ensemble des éléments du stator disposés en dehors des encoches du corps monobloc. Cela présente pour avantage, notamment, de laisser toute liberté pour la mise en place des éléments de raccordement en étoile ou en triangle entre les phases et pour la mise en place des sorties de phases auxquelles sera raccordé, par exemple, le pont de diodes permettant de redresser le courant.

Selon un mode de conception préférentiel du stator de machine électrique tournante objet de l'invention, les premières branches et les secondes branches comprennent chacune une section en coupe transversale de forme rectangulaire. Les coins du rectangle seront de préférence légèrement arrondis pour garantir un dépôt homogène de l'isolant sur tout le contour des segments conducteurs. L'introduction des premières et secondes branches dans le sens longitudinal, à l'intérieur des encoches, permet de s'affranchir de la présence des pieds-de-dents et favorise la mise en œuvre d'une section rectangulaire à l'intérieur des encoches, ce qui permet d'optimiser les dimensions des pieds-de-dents et le taux de remplissage des encoches. Cela contribue à améliorer l'échange électromagnétique entre le rotor et le stator et, le rendement de la machine électrique tournante.

Selon un mode de conception préférentiel du stator de machine électrique tournante objet de l'invention, les première et seconde surfaces dénudées sont disposées en vis-à-vis et en contact dans le sens radial l'une par rapport à l'autre, à l'intérieur de l'encoche. Ces surfaces dénudées s'étendent sur une longueur correspondant à la longueur de l'encoche. On pourrait toutefois prévoir, dans une variante de conception, de disposer ces première et seconde surfaces dénudées en vis-à-vis et en contact dans le sens de la circonférence l'une par rapport à l'autre.

Dans une première réalisation, selon ce mode de conception préférentiel précité du stator de machine électrique tournante, les premières et secondes branches ont une forme parallélépipédique, de section rectangulaire, munie d'un biseau. Ces biseaux sont disposés en vis-à-vis sur les première et seconde branches. En outre, les première et seconde surfaces dénudées sont disposées sur les faces biseautées en vis-à-vis. Selon cette première réalisation, la section des enroulements dans les chignons est identique à la section des enroulements dans les encoches.

De préférence, selon cette première réalisation, les biseaux comprennent un angle de valeur maximale égale à 5 degrés. Cela permet un auto-blocage entre les première et seconde surfaces dénudées lorsqu'une pression est exercée sur les première et seconde branches pour maintenir en contact lesdites surfaces dénudées.

Dans une seconde réalisation, selon ce mode de conception préférentiel précité du stator de machine électrique tournante, les premières et secondes branches ont une forme parallélépipédique, de section rectangulaire, munie d'un chanfrein. Ces chanfreins sont disposés en vis-à-vis sur les première et seconde branches. En outre, les première et seconde surfaces dénudées sont disposées sur les faces chanfreinées en vis-à-vis. Cela permet de réduire la section de l'enroulement dans les deux chignons constitués respectivement des premières têtes de liaison des premiers segments conducteurs et des secondes têtes de liaison des seconds segments conducteurs, par rapport à la section de l'enroulement dans les encoches. Ainsi, cette seconde réalisation permet de réduire la quantité de matière utilisée pour la fabrication des enroulements du bobinage. Cela contribue à réduire la consommation de matière première, notamment du cuivre, lors de la fabrication du stator. En outre, la réduction de la quantité de matière des enroulements dans les chignons favorise un meilleur refroidissement du bobinage par ventilation.

De préférence, selon cette seconde réalisation, les chanfreins comprennent un angle de valeur maximale égale à 5 degrés. Cela permet un auto-blocage entre les première et seconde surfaces dénudées lorsqu'une pression est exercée sur les première et seconde branches pour maintenir en contact lesdites surfaces dénudées.

Dans une troisième réalisation, selon ce mode de conception préférentiel précité du stator de machine électrique tournante, les premières et secondes branches ont une forme parallélépipédique, de section rectangulaire. Les première et seconde surfaces dénudées sont en outre disposées sur les faces longitudinales en vis-à-vis de ces première et seconde branches. Cette troisième réalisation permet de diviser par deux la section des enroulements dans les chignons par rapport à la section des enroulements dans les encoches, et procure donc les mêmes avantages que la seconde réalisation.

Selon ces différents modes de réalisation précités, il est possible d'agencer des moyens d'ancrage entre les première et seconde surfaces dénudées. Ces moyens d'ancrage sont configurés pour bloquer les mouvements relatifs entre les première et seconde branches attenantes dans le sens longitudinal de l'encoche, ce qui permet de maintenir lesdites surfaces en contact l'une contre l'autre.

Selon ces différents modes de réalisation, les moyens de maintien sont constitués de cales de pression disposées respectivement dans chaque encoche et configurées pour exercer un effort dans le sens radial, contre les premières et secondes branches disposées dans chacune desdites encoches. On pourrait toutefois prévoir des variantes de conception de moyens de maintien. Par exemple, ces moyens de maintien pourraient être configurés pour bloquer toute translation des premières et secondes branches dans le sens longitudinal des encoches, en sorte de maintenir les premières et secondes surfaces dénudées en contact respectivement les unes contre les autres dans les encoches. On peut aussi prévoir un montage serré des premières et secondes branches en contact les unes contre les autres, à l'intérieur des encoches.

Selon une conception préférentielle du stator de machine électrique tournante objet de l'invention, les premiers et seconds segments conducteurs présentent chacun un soyage entre leurs premières branches, respectivement entre leurs secondes branches. Ce soyage favorise la mise en place des premières et secondes branches qui se succèdent sur une même couche dans les encoches, de manière circonférentielle sur le corps du stator.

Selon un mode de conception préférentiel du stator de machine électrique tournante objet de l'invention, chaque enroulement du bobinage comprend un segment conducteur d'entrée de phase qui comprend une branche d'entrée revêtue d'un isolant excepté la présence d'une surface d'entrée dénudée. Cette branche d'entrée est engagée dans une encoche, la surface d'entrée dénudée venant en contact avec la seconde surface dénudée en vis-à-vis d'un second segment conducteur de début de phase. En outre, les moyens de maintien sont configurés pour maintenir la surface d'entrée dénudée et la seconde surface dénudée en contact l'une contre l'autre. Cette conception facilite également la mise en œuvre des enroulements du bobinage et offre en outre une grande liberté de positionnement des entrées des phases auxquelles est raccordé le pont de diodes de redressement du courant. Chaque segment conducteur d'entrée comprend en outre une branche de connexion qui prolonge la branche d'entrée vers l'extérieur du chignon, cette branche de connexion étant configurée pour être raccordée audit pont de diodes de redressement du courant.

Selon un mode de conception préférentiel du stator de machine électrique tournante objet de l'invention, celui-ci comprend au moins un segment conducteur de raccordement qui comprend des branches de raccordement. Ce segment conducteur de raccordement est revêtu d'un isolant, excepté les branches de raccordement qui comprennent chacune une surface de raccordement dénudée, les surfaces de raccordement dénudées venant en contact avec les secondes surfaces dénudées de seconds segments conducteur de fin des phases voire éventuellement de début des phases selon le type de raccordement prévu, par exemple en étoile ou en triangle dans le cas d'un bobinage triphasé. En outre, les moyens de maintien sont configurés pour maintenir lesdites surfaces de raccordement dénudées et lesdites secondes surfaces dénudées en contact les unes contre les autres. Ce segment conducteur de raccordement permet de réaliser une connexion entre les phases du bobinage.

De manière préférentielle, les premières têtes de liaison des premiers segments conducteurs et les secondes têtes de liaison des seconds segments conducteurs présentent chacun une forme en V. De préférence, cette forme en V dispose d'un angle au somment qui est légèrement tronqué.

L'invention concerne également le procédé de fabrication d'un stator de machine électrique tournante tel que défini dans la revendication 13.

L'insertion des premières branches et l'insertion des secondes branches dans les encoches peuvent être réalisées concomitamment ou en deux étapes distinctes. En outre, les premières branches sont de préférence toutes insérées en même temps dans l'encoche. Il en est de même pour les secondes branches.

Ainsi le procédé de fabrication évite toute contrainte sur les premiers et seconds segments conducteurs lors de leur mise en place dans les encoches, ce qui permet de minimiser l'épaisseur de l'isolant d'encoche. On optimise ainsi le taux de remplissage des encoches.

La durée pour constituer le bobinage est en outre fortement réduite puisque les premiers segments conducteurs et les seconds segments conducteurs peuvent être préparés en amont de l'étape d'assemblage dans les encoches du corps de stator. Par ailleurs, la mise en place des premiers et seconds segments conducteurs en vis-à-vis et sur toute la périphérie du stator peut être réalisée en une seule étape et sans aucune contrainte et opération de soudure entre les premiers et seconds segments conducteurs. Cela permet d'optimiser le temps de fabrication du bobinage et évite la réalisation de soudures coûteuses et produisant des déchets.

En outre, l'insertion des premières et secondes branches dans le sens longitudinal des encoches permet de conserver un pied-de dent de largeur optimale, ce qui favorise l'échange électromagnétique entre le stator et le rotor de la machine électrique tournante.

Selon le procédé de fabrication du stator de machine électrique tournante, les premiers et seconds segments conducteurs sont préalablement réalisés chacun en :
- constituant une épingle dans une feuille ou plaque de matière conductrice, de préférence par emboutissage ou par découpe au laser ou au jet d'eau ;
- revêtant l'épingle d'un isolant ;
- dénudant les branches de l'épingle dans les zones correspondant aux surfaces dénudées, par exemple par usinage ou rectification, en sorte de retirer l'isolant sur lesdites surfaces ;
- pliant l'épingle pour lui donner une forme en U avec ses deux branches.

Préalablement à l'étape de revêtement de l'épingle avec un isolant, celle-ci peut subir une étape de formation d'un biseau ou d'un chanfrein lorsqu'il s'agit de segments conducteurs selon la première réalisation ou la seconde réalisation, telles que précitées. Dans certains cas, on peut aussi prévoir une feuille de matière qui est laminée pour former dans ses deux portions latérales des chanfreins ou des biseaux, ladite feuille étant ensuite estampée pour constituer des épingles.

De préférence, durant l'étape de pliage de l'épingle, on réalise un soyage entre les branches du segment conducteur.

L'invention concerne également une machine électrique tournante de type moteur ou générateur qui comprend un tel stator objet de l'invention.

Les caractéristiques et avantages de la présente invention apparaîtront à la lecture de modes de mise en œuvre non limitatifs qui s'appuient sur des figures, parmi lesquelles :
- la figure 1 illustre une vue tridimensionnelle d'un stator de machine électrique tournante qui comprend un bobinage avec cinq phases raccordées en étoile ;
- la figure 2 illustre une vue éclatée de la figure 1 ;
- la figure 3 illustre une vue tridimensionnelle en coupe du corps du stator et met en évidence l'insertion de premiers et de seconds segments conducteurs d'une portion de phase dans des encoches ;
- la figure 4 illustre une portion de phase constituée de premiers et seconds segments conducteurs en contact ;
- les figures 5A et 5B illustrent cinq premiers segments conducteurs successifs et mettent en évidence l'alignement circonférentiel sur une même couche, des premières branches ;
- les figures 6A et 6B illustrent une phase de bobinage constituée d'un enroulement sur six couches et le cheminement de cette phase sur six couches, telle que cette phase apparaît normalement lorsque les premiers et seconds segments conducteurs sont positionnés et connectés entre eux dans les encoches du corps du stator;
- les figures 7, 8 et 9 illustrent en coupe trois variantes de mise en œuvre des surfaces dénudées sur les premières et secondes branches des premiers et seconds segments conducteurs ;
- la figure 10 illustre un segment de raccordement de cinq phases en étoile permettant la mise en œuvre du stator de la figure 1 ;
- les figures 11 à 14 illustrent des variantes de raccordement possibles pour un bobinage à trois phases et pour un bobinage à cinq phases ;
- les figures 15A à 15C illustrent trois variantes de l'étape d'estampage lors de la mise en œuvre de l'épingle et, les figures 16 à 18 illustrent différentes étapes de mise en œuvre des premiers ou seconds segments conducteurs à partir de l'épingle ;
- la figure 19 illustre des moyens d'ancrage entre les premières branches et les secondes branches des premiers et seconds segments conducteurs ;
- la figure 20 illustre une variante de stator avec un raccordement de cinq phases en pentagone et la figure 21 illustre un des segments de raccordement permettant la mise en œuvre dudit stator de la figure 20 ;
- les figures 22 et 23 illustrent deux vues partielles en coupe transversale d'un corps de stator selon l'invention, mettant en évidence deux sections transversales différentes des encoches et des branches des segments conducteurs.

Dans la suite de la description, les mêmes références seront utilisées pour définir les mêmes éléments sur une pièce et/ou sur diverses variantes de réalisation du stator objet de l'invention.

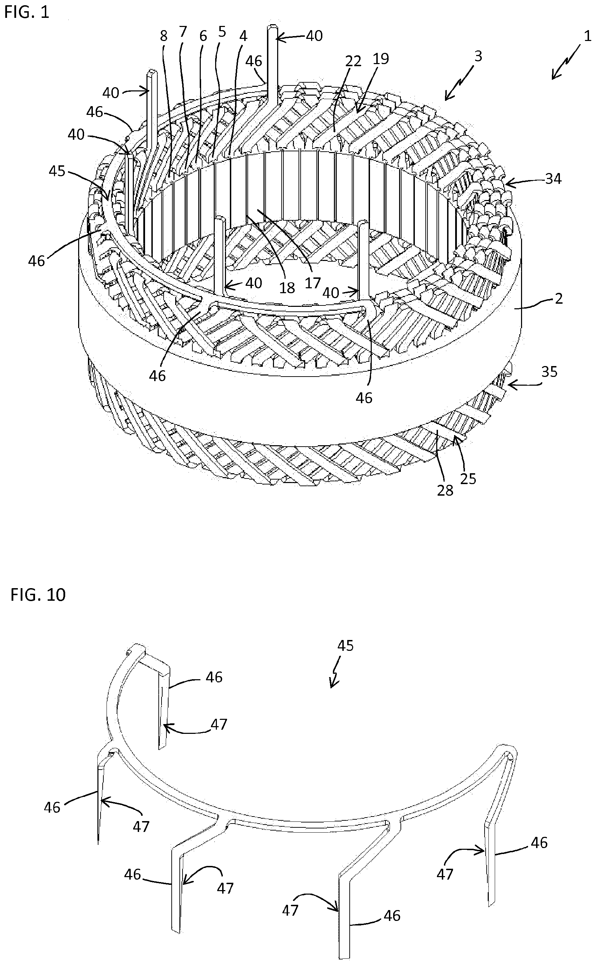

Sur la figure 1 est illustré un stator 1 de machine tournante électrique (non illustrée) qui peut consister en un moteur ou un générateur. Dans une application, le stator 1 est destiné à la mise en œuvre d'un alternateur ou d'un alterno-démarreur de véhicule automobile.

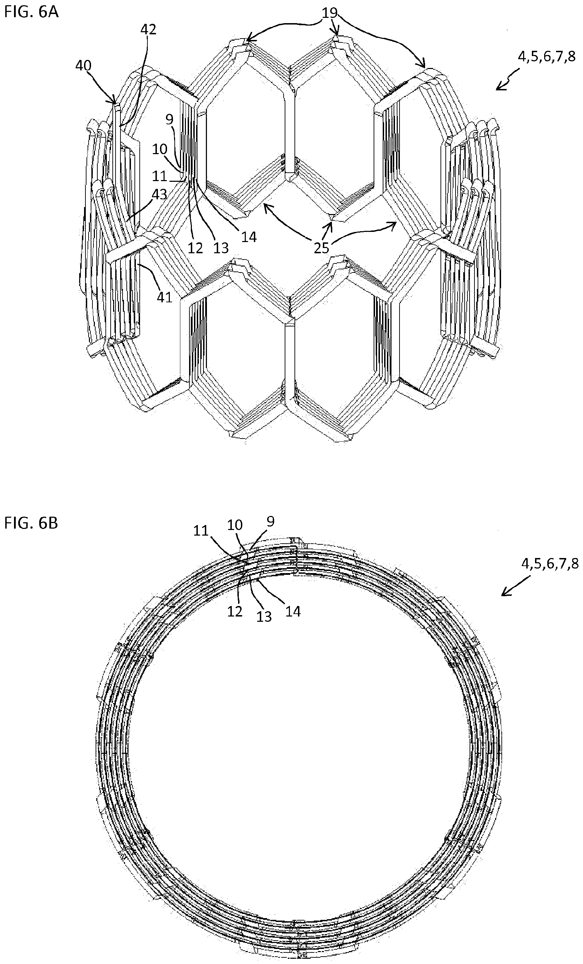

Ce stator 1 comprend un corps 2 et un bobinage 3. Sur cette figure 1, le bobinage 3 comprend cinq phases 4, 5, 6, 7, 8 constituées chacune d'un seul enroulement sur six couches 9, 10, 11, 12, 13, 14 illustrées plus en détail sur les figures 6A et 6B. Bien entendu, le nombre de phases peut être modifié ; on peut par exemple prévoir un bobinage triphasé, chaque phase étant constituée d'un seul enroulement. On peut également modifier le nombre d'enroulements par phase; on peut par exemple prévoir deux enroulements par phase. On peut également modifier le nombre de couches de chaque enroulement.

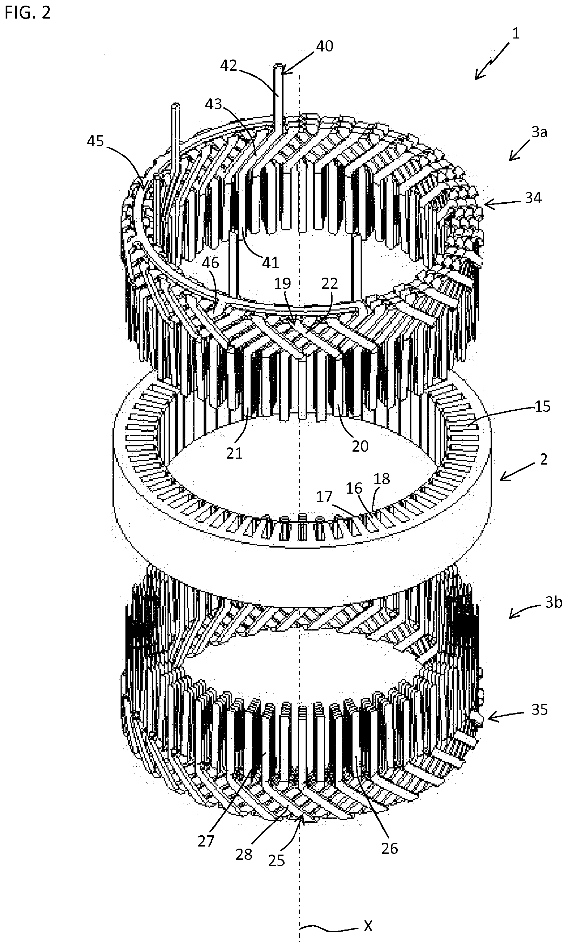

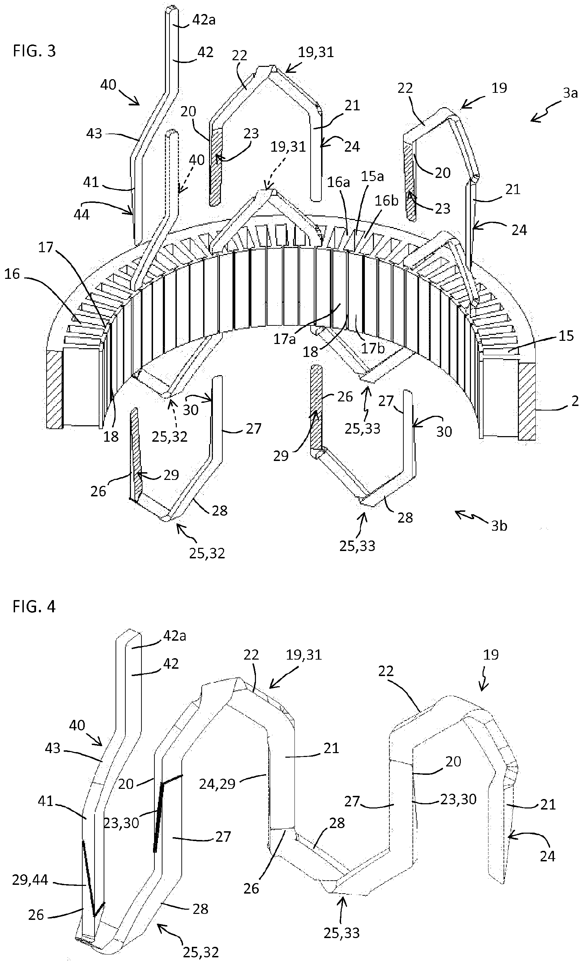

Sur les figures 2 et 3, on remarque que le corps 2 comprend des encoches 15 qui sont disposées dans le sens longitudinal parallèle à l'axe X du stator 1. Cet axe X correspond à l'axe de rotation du rotor (non illustré) de la machine électrique tournante. En outre, les encoches 15 s'étendent radialement et de manière circonférentielle, avec un espacement entre elles, autour du corps 2. Ces encoches 15 sont séparées les unes des autres par des dents 16, chaque dent 16 comprenant à son extrémité un pied-de-dent 17 qui s'étend de manière circonférentielle de part et d'autre de la dent 16. Ainsi, tel qu'illustré en figure 3, deux pieds-de-dents 17a, 17b de deux dents 16a, 16b attenantes permettent de fermer en quasi-totalité une encoche 15a, seule une petite fente longitudinale 18 maintenant ouverte cette encoche 15a. Il en est de même pour toutes les encoches 15.

En regard des figures 2, 3 et 4, notamment, on remarque que le bobinage 3 comprend une première partie 3a et une seconde partie 3b disposées respectivement des deux côtés longitudinaux du corps 2.

La première partie 3a du bobinage 3 comprend des premiers segments conducteurs 19, chaque premier segment conducteur 19 comprenant deux premières branches 20, 21 reliées entre elles par une première tête de liaison 22. Ces premiers segments conducteurs 19 sont de préférence en cuivre et sont revêtus d'un isolant 19a, de préférence de l'émail, à l'exception des deux premières branches 20, 21 qui comprennent chacune une première surface dénudée 23, 24, comme l'illustrent les figures 3, 4, 7 à 9, 19, 22 et 23.

De même, la seconde partie 3b du bobinage 3 comprend des seconds segments conducteurs 25, chaque second segment conducteur 25 comprenant deux secondes branches 26, 27 reliées entre elles par une seconde tête de liaison 28. Ces seconds segments conducteurs 25 sont également en cuivre et revêtus d'un isolant 25a, à l'exception des deux secondes branches qui comprennent chacune une seconde surface dénudée 29, 30, comme l'illustrent les figures 3, 4, 7 à 9, 19, 22 et 23.

Les premiers segments conducteurs 19 et les seconds segments conducteurs 25 sont disposés en vis-à-vis et en quinconce de chaque côté du corps 2. Tel qu'illustré sur la figure 3 en trait-tirés et sur la figure 4, lors de l'insertion des premières branches 20, 21 et des secondes branches 26, 27 à l'intérieur des encoches 15, la première surface dénudée 23 d'une première branche 20 d'un premier segment conducteur 31 vient en contact avec la seconde surface dénudée 30 d'une seconde branche 27 d'un second segment conducteur 32. De même, la première surface dénudée 24 de l'autre première branche 21 de ce premier segment conducteur 31 vient en contact avec la seconde surface dénudée 29 de la seconde branche 26 du second segment conducteur 33 suivant le précédent second segment conducteur 32. La même opération est réalisée entre tous les premiers et seconds segments conducteurs 19, 25, pour chaque spire de chacun des enroulements 4, 5, 6, 7, 8. Cette opération reste la même quel que soit le nombre de phases du bobinage ; la représentation de la figure 3 correspond à un bobinage à six phases tandis que celui de la figure 2 correspond à un bobinage à cinq phases, à titre d'exemple.

On remarque sur la figure 6B que, pour chaque enroulement 4, 5, 6, 7, 8 schématisé par un trait continu, les spires disposées sur six couches 9, 10, 11, 12, 13, 14 sont enroulées en sens inverse les unes à la suite des autres autour du corps 2 du stator 1.

Avantageusement, toutes les premières branches 20, 21 et toutes les secondes branches 26, 27 sont insérées concomitamment à l'intérieur des encoches 15, ce qui permet un gain de temps lors de l'assemblage. On peut toutefois prévoir deux étapes distinctes pour insérer dans le corps 2, d'abord les premiers segments conducteurs 19 puis les seconds segments conducteurs 25.

Lorsque le bobinage 3 est formé, les premières têtes de liaison 22 des premiers segments conducteurs 19 forment un premier chignon 34 d'un côté du corps 2 et, les secondes têtes de liaison 28 des seconds segments conducteurs 25 forment un second chignon 35 de l'autre côté du corps 2, comme illustré en figures 1, 2 et 20.

Tel qu'illustré sur les figures 1 à 3 et 20, lorsque les premiers et seconds segments conducteurs 19, 25 sont insérés dans le corps 2, les pieds-de-dents 17 empêchent le dégagement des premières branches 20, 21 et des secondes branches 26, 27 hors des encoches 15, dans le sens radial.

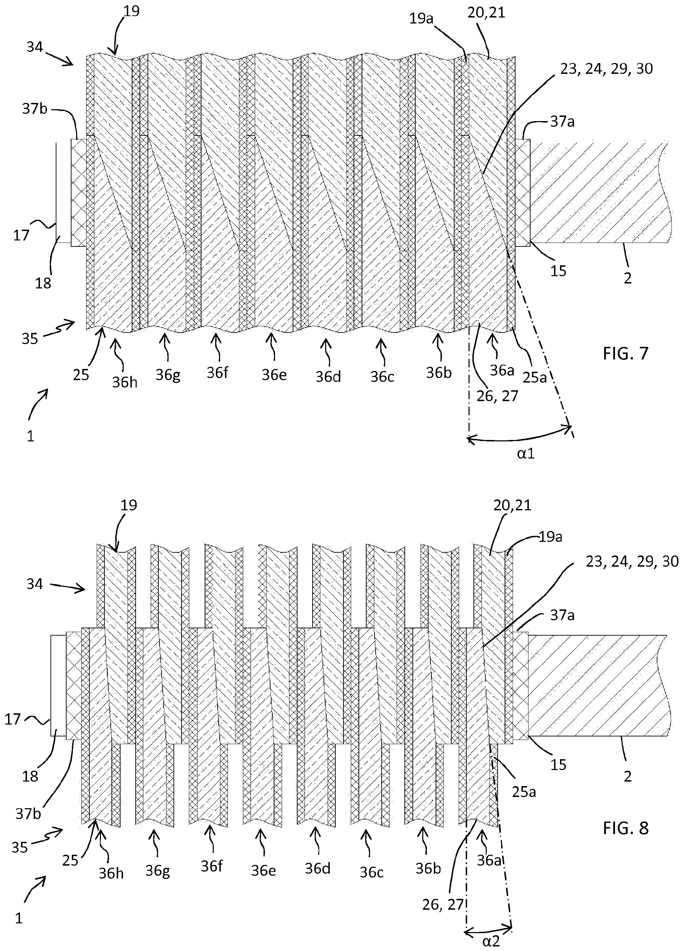

Les figures 7 à 9 illustrent différentes réalisations des premières surfaces dénudées 23, 24 et secondes surfaces dénudées 29,30 respectivement sur les premières branches 20, 21 et sur les secondes branches 26, 27.

Sur la figure 7, les premières surfaces dénudées 23, 24 et les secondes surfaces dénudées 29, 30 sont complémentaires et biseautées. Cette forme biseautée apparaît également sur les figures 2 à 4. Tel qu'illustré en figure 7, la face biseautée est inclinée d'un angle α1. Cet angle α1 est de préférence inférieur à 5 degrés, ce qui permet un auto-blocage entre les premières surfaces dénudées 23, 24 et les secondes surfaces dénudées 29, 30 en contact lorsqu'une pression est exercée dans le sens radial sur les premières branches 19 et secondes branches 25.

Sur cette figure 7, l'enroulement comprend huit couches 36a, 36b, 36c, 36d, 36e, 36f, 36g, 36h disposées dans l'encoche 15. En outre, on constate la présence d'un isolant d'encoche 37a, 37b disposé de chaque côté des couches 36a, 36b, 36c, 36d, 36e, 36f, 36g, 36h à l'intérieur de l'encoche 15. Les couches 36a, 36b, 36c, 36d, 36e, 36f, 36g, 36h sont montées serrées dans l'encoche 15 en sorte d'exercer une pression contre ces couches. La combinaison de la pression exercée et de l'angle α1 inférieur à 5 degrés permet de maintenir les premiers segments conducteurs 19 en contact avec les seconds segments conducteurs 25.

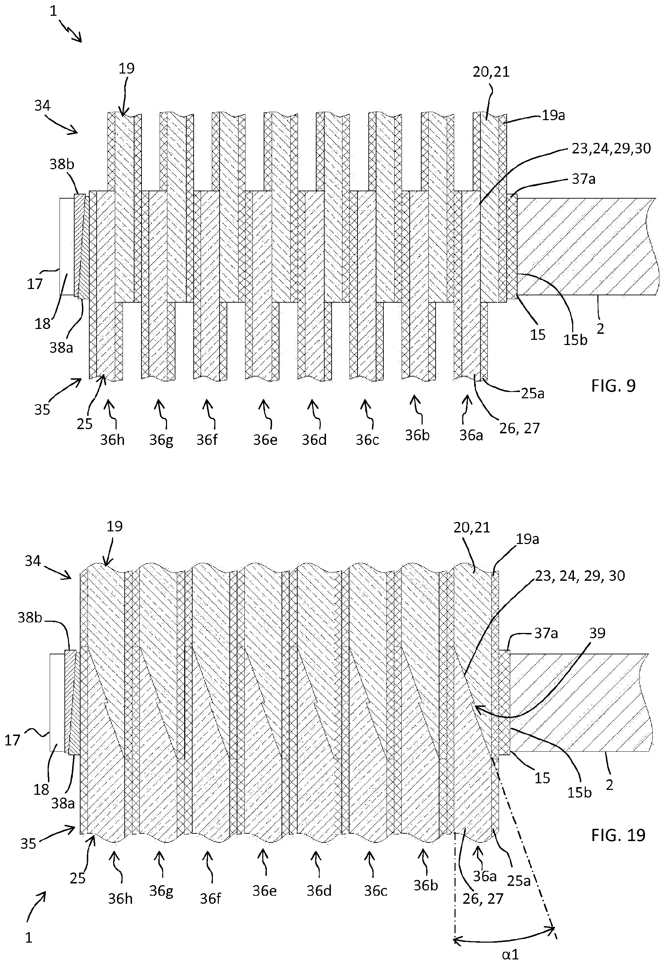

Bien entendu, on pourrait prévoir un angle α1 supérieur à 5 degrés et des moyens de maintien différents configurés pour bloquer la translation des premiers segments conducteurs 19 et des seconds segments conducteurs dans le sens de l'axe X. A titre d'exemple, on constate sur la figure 19 que les faces biseautées comprennent une forme en ardillon 39 qui permet un ancrage entre la première branche 20, 21 et la seconde branche 26, 27 dans le sens longitudinal de l'encoche 15.

On constate sur la figure 19 qu'un isolant d'encoche 37a est disposé dans le fond 15b de l'encoche 15, tandis que deux cales de pression 38a, 38b, de forme biseautée, sont disposées du côté des pieds-de-dents 17 et permettent d'exercer une pression contre les couches 36a, 36b, 36c, 36d, 36e, 36f, 36g, 36h à l'intérieur de l'encoche 15. On pourrait inverser la position des cales de pression 38a, 38b et la position de l'isolant d'encoche 37a dans cette encoche 15.

De préférence, la longueur des premières et secondes surfaces dénudées 23, 24, 29, 30 biseautées est au moins égale à la longueur de l'encoche 15, comme illustré sur la figure 7.

On constate sur la figure 7 que les sections d'enroulement des deux chignons 34, 35 sont identiques à la section d'enroulement dans l'encoche 15.

Sur la figure 8, on retrouve des caractéristiques identiques à celles de la figure 7, excepté que la forme biseautée des premières surfaces dénudées 23, 24 et des secondes surfaces dénudée 29, 30 est remplacée par un chanfrein incliné d'un angle α2. Cet angle α2 est de préférence inférieur à 5 degrés pour permettre un auto-blocage entre les premières branches 20, 21 et les secondes branches 26, 27 sous l'action de la pression exercée par leur montage serré à l'intérieur des encoches 15. On pourrait également prévoir un angle α2 supérieur à 5 degrés et un ardillon 39, comme pour les faces biseautées de la figure 19. On pourrait également envisager d'autres moyens de maintien en contact. Les diverses variantes de moyens de pression sur les couches 36a, 36b, 36c, 36d, 36e, 36f, 36g, 36h à l'intérieur de l'encoche 15, notamment les cales de pression 38a, 38b illustrées en figure 19, pourront être mises en œuvre pour ce mode de réalisation de la figure 8.

Par ailleurs, les surfaces dénudées 23, 24, 29, 30 s'étendent sur une longueur qui correspond au moins à la longueur de l'encoche 15, tel qu'illustré sur la figure 8. On constate sur la figure 8 que les sections d'enroulement des deux chignons 34, 35 sont inférieures à la section d'enroulement dans l'encoche 15 du fait de la présence des chanfreins qui s'étendent au moins sur la longueur de l'encoche 15.

Sur la figure 9, on retrouve des caractéristiques identiques à celles des figures 7 et 8, excepté que la forme biseautée ou la forme chanfreinée est supprimée. Les premières branches 20, 21 et les secondes branches 26, 27 ont la forme d'un parallélépipède, c'est-à-dire que la section, vue dans un plan de coupe transversal, est constante sur toute la longueur desdites branches. En outre, les premières surfaces dénudée 23, 24 et les secondes surfaces dénudées 29, 30 sont directement mises en œuvre sur les faces attenantes en vis-à-vis des premières branches 20, 21 et secondes branches 26, 27. Ce qui correspond au mode de réalisation de la figure 8, avec un angle α2 nul.

On constate sur la figure 9 la présence d'un isolant d'encoche 37a dans le fond 15b de l'encoche 15 et d'un jeu de cales de pression 38a, 38b du côté des pieds-de-dents 17, comme pour la figure 19. On pourrait également mettre en œuvre d'autres variantes de moyens de pression telles que décrites précédemment. On pourrait également prévoir un ardillon 39, comme sur la figure 19.

Comme pour les figures 7 et 8, on constate sur la figure 9 que les premières et secondes surfaces dénudées s'étendent au moins sur la longueur de l'encoche 15. On constate sur la figure 9 que les sections d'enroulement des deux chignons 34, 35 sont égales à la moitié de la section d'enroulement dans l'encoche 15. Cela facilite le refroidissement des chignons 34, 35 et permet en outre de réduire la quantité de matière du bobinage 3 dans ces chignons 34, 35. Il en est de même pour la figure 8.

Bien entendu, on pourrait envisager d'autres formes complémentaires de premières surfaces dénudées et de secondes surfaces dénudées. Il conviendra simplement de prévoir des moyens de maintien en contact desdites surfaces dénudées, adaptés pour empêcher la translation des premiers segments conducteurs 19 et des seconds segments conducteurs 25 dans le sens longitudinal des encoches 15.

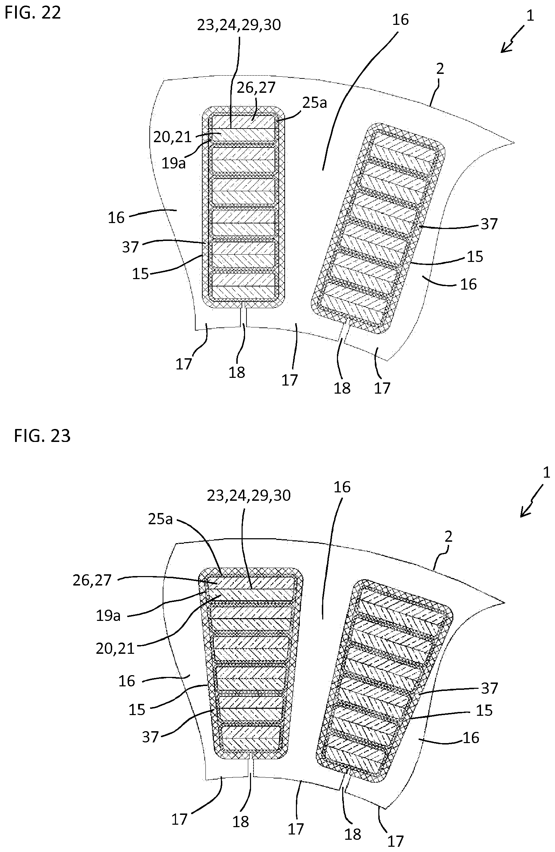

Tel qu'illustré sur la figure 22, les premières branches 20, 21 et les secondes branches 26, 27 présentent une forme rectangulaire dans un plan de coupe transversal. Il en est de même pour les encoches 15. Dans une variante illustrée en figure 23, les premières branches 20, 21 et les secondes branches 26, 27 présentent une forme trapézoïdale dans un plan de coupe transversal. Il en est de même pour les encoches 15. Cela est envisageable pour les trois variantes de réalisation illustrées en figures 7 à 9 et décrites précédemment, voire pour toute autre variante de réalisation. On remarque sur ces figures 22 et 23, que les encoches 15 sont revêtues d'un isolant d'encoche 37.

Sur les figures 1 à 4 et 6A, on constate que chaque enroulement 4, 5, 6, 7, 8 comprend un segment conducteur d'entrée de phase 40 qui comprend une branche d'entrée 41 prolongée vers le haut par une branche de connexion 42, la branche d'entrée 41 et la branche de connexion sont raccordées entre elles par une portion de liaison 43. Le segment conducteur d'entrée de phase 40 est revêtu d'un isolant excepté que la branche d'entrée 41 comprend une surface d'entrée dénudée 44 et que l'extrémité 42a de la branche de connexion 42 est adaptée, par exemple dénudée, pour pouvoir être raccordée à un pont de diodes de redressement du courant (non illustré). Bien entendu, la forme de la branche de connexion 42 et les moyens de raccordement de cette branche de connexion 42 seront adaptés en fonction de la configuration du pont-de-diodes (non illustré).

La surface d'entrée dénudée 44 est de conception identique aux premières surfaces dénudées 23, 24 sur les premières branches 20, 21 des premiers segments conducteurs 19. Cette surface d'entrée dénudée 44 vient en contact avec la seconde surface dénudée 29 en vis-à-vis d'un second segment conducteur 25,32 disposé en début de phase, comme l'illustrent notamment les figures 3 et 4.

On constate sur les figures 1 à 4 et 6A que la portion de liaison 43 est de forme identique à celle de la première partie des premières têtes de liaison 22 sur les premiers segments conducteurs 19, en sorte de s'intégrer parfaitement dans le premier chignon 34, de manière identique auxdites premières têtes de liaison 22.

Les cales de pression 38a, 38b illustrées sur les figures 9 et 19, voire tous autres moyens de maintien adaptés, permettent de maintenir la surface d'entrée dénudée 44 de la branche d'entrée 41 en contact avec la seconde surface d'entrée 29 du second segment conducteur 25, 32 de début de phase. On pourra éventuellement prévoir un ardillon 39 comme illustré sur la figure 19.

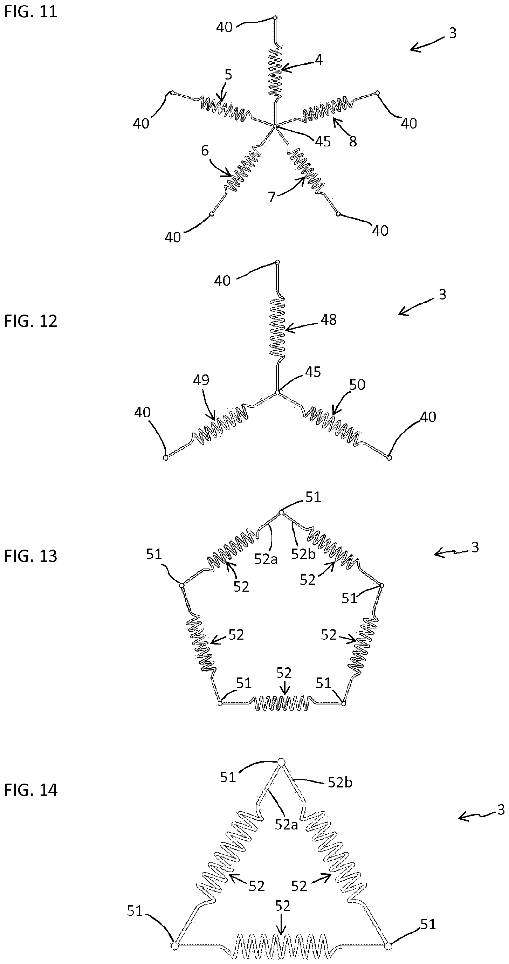

Tel qu'illustré sur les figures 1, 2 et 10, le stator 1 comprend un segment conducteur de raccordement 45. Ce segment conducteur de raccordement 45 comprend des branches de raccordement 46, cinq dans le cas d'espèce où ledit segment conducteur de raccordement 45 permet une connexion en étoile entre les cinq phases 4, 5, 6, 7, 8 du bobinage 3, tel que cela est schématisé en figure 11.

Ce segment conducteur de raccordement 45 est revêtu d'un isolant excepté les branches de raccordement 46 qui comprennent chacune une surface de raccordement dénudée 47. Ces surfaces de raccordement dénudées 47 viennent en contact avec les secondes surfaces dénudées 30 de cinq seconds segments conducteurs 25 disposés en fin des phases.

Les cales de pression 38a, 38b illustrées en figures 9 et 19, voire tous autres moyens de maintien, permettent également de maintenir les surfaces de raccordement dénudées 47 et les secondes surfaces dénudées 30 en contact les unes contre les autres, leurs formes étant complémentaires. On pourra éventuellement prévoir un ardillon 39 comme illustré sur la figure 19.

Différentes configurations de segment conducteur de raccordement 45 sont envisageables en fonction du nombre de phases présent sur le bobinage 3. Lorsque le bobinage 3 est triphasé, chaque phase 48, 49, 50 étant constituée d'un seul enroulement, le segment conducteur de raccordement sera de conception similaire à celle du segment de raccordement 45 de la figure 10, avec cependant seulement trois branches de raccordement 46, ce qui permettra de concevoir un raccordement triphasé en étoile, tel que cela est schématisé en figure 12.

Tel que schématisé sur les figures 13 et 14, on pourrait également prévoir des variantes de segments conducteurs de raccordement 51 entre des phases 52 d'un bobinage 3. Ce segment conducteur de raccordement 51 serait par exemple configuré pour connecter les phases 52 en formant un pentagone lorsque ledit bobinage 3 dispose de cinq phases 52, tel que schématisé sur la figure 13. Voire en triangle lorsque ce bobinage 3 dispose de trois phases 52, tel que schématisé en figure 14.

Les figures 13, 20 et 21 correspondent à une variante de stator 1 comprenant cinq phases 52 composées chacune d'un seul enroulement, les cinq phases 52 étant raccordées entre elles pour former un pentagone au moyen de cinq segments de raccordement 51. Chaque segment de raccordement 51 comprend une première branche de raccordement 53a munie d'une surface de raccordement dénudée 54 qui vient en contact avec la seconde surface dénudée 29 d'une seconde branche 26 du second segment conducteur 25 disposé en fin d'une première phase 52a. De même, ce segment de raccordement 51 comprend une seconde branche de raccordement 53b munie d'une surface de raccordement dénudée 55 qui vient en contact avec la seconde surface dénudée 30 d'une seconde branche 27 du second segment conducteur 25 disposé en début d'une seconde phase 52b devant être raccordée à la précédente phase.

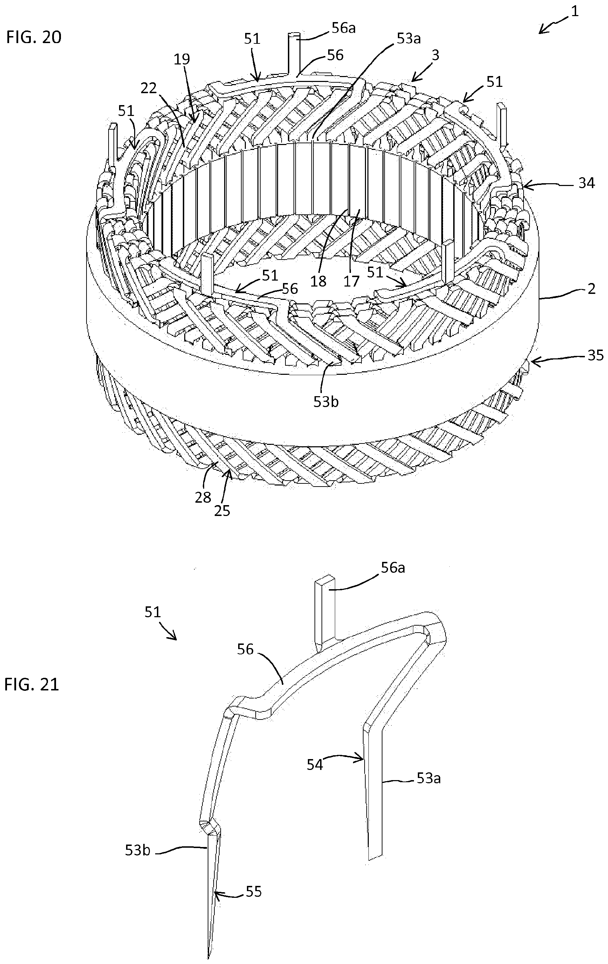

Tel qu'illustré en figure 20, cette variante de segment conducteur de raccordement 51 comprend également une branche de connexion 56 qui s'étend à l'extérieur du premier chignon 34, l'extrémité 56a de cette branche de connexion 56 étant adaptée, par exemple dénudée, pour permettre son raccordement à un pont de diodes de redressement.

Bien entendu le reste du segment conducteur de raccordement 51 est revêtu d'un isolant, comme pour les autres segments conducteurs décrits précédemment.

Les cales de pression 38a, 38b illustrées en figures 9 et 19, voire d'autres moyens de maintien, permettent également de maintenir les branches de raccordement 54, 55 avec les secondes branches 26, 27 des seconds segments conducteurs 25 disposés en fin de première phase et en début de seconde phase. On pourra également prévoir un ardillon 39 comme illustré en figure 19.

Comme on le constate sur la figure 4, par exemple, les premiers segments conducteurs 19 et les seconds segments conducteurs 25 ont une conception comparable. Leur principe de mise en œuvre reste donc identique. On ne décrira donc qu'un seul mode de mise en œuvre, le second se retrouvant par analogie ou transposition.

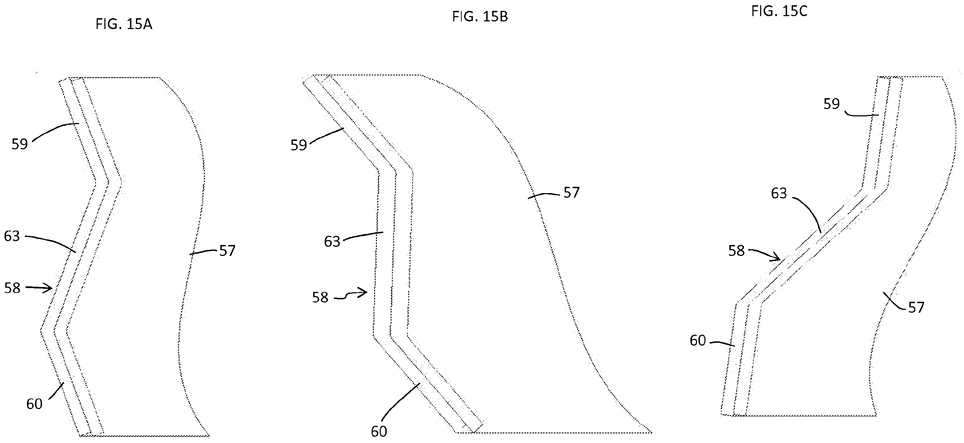

Ces premiers et seconds segments conducteurs 19, 25 sont issus d'une feuille ou plaque 57 de matière conductrice, de préférence du cuivre, qui est débitée par emboutissage sous la forme d'épingles 58 qui ressemblent à une chicane, tel qu'illustré en figures 15A à 15C. Ces figures 15A à 15C illustrent différents modes d'emboutissage des épingles, lesquels permettent de jouer sur les sections de l'épingle 58 dans ses portions d'extrémités 59, 60 et dans sa portion centrale 63, notamment pour modifier la section du bobinage 3 dans les premier et second chignons 34, 35. L'opération d'emboutissage permet avantageusement de mettre en œuvre des épingles 58 de très fine épaisseur sans étirement de la matière. Cela permet également d'avoir une section d'épingle 58 plus importante dans les zones de courbure de cette épingle 58 qui vont recevoir un soyage, afin de conserver une section constante lorsque le segment conducteur 19, 25 est achevé. D'autres modes de constitution de l'épingle sont en outre envisageables; on peut par exemple remplacer l'emboutissage par une découpe au laser.

Pour une réalisation du stator 1 selon la figure 7, avec des surfaces dénudées biseautées 23, 24, 29, 30, les épingles 58 subissent une étape de biseautage de leurs portions d'extrémités 59, 60, par exemple par un laminage. Dans certains cas, on peut également réaliser ces laminages directement sur la feuille ou plaque 57, avant l'étape d'emboutissage. Cela est également valable pour une réalisation du stator 1 selon la figure 8, avec des surfaces dénudées chanfreinées 23, 24, 29, 30.

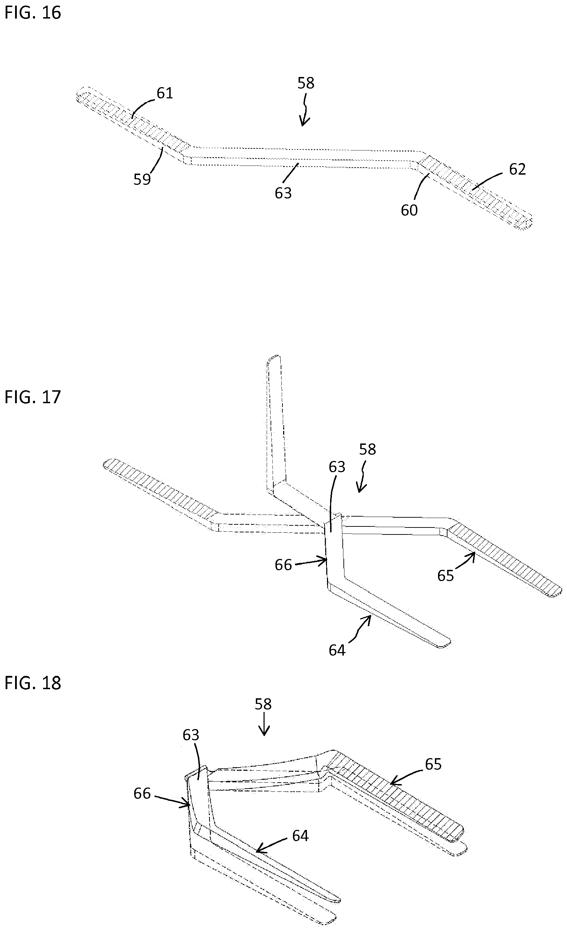

Ces épingles 58 sont ensuite revêtues d'un isolant, de préférence de l'émail, puis les deux portions d'extrémités 59, 60 sont dénudées, de préférence par rectification ou meulage, en sorte qu'elles présentent chacune une surface dénudée 61,62, tel qu'illustré en figure 16.

Ces épingles 58 sont ensuite pliées dans leur portion centrale 63, ce qui permet la formation d'un U présentant deux branches 64, 65 raccordées entre elles par un élément de liaison 66, tel qu'illustré en figure 17, qui constitue une première tête de liaison 22 dans le cas d'un premier segment conducteur 19 et une seconde tête de liaison 28 dans le cas d'un second segment conducteur 25. Cet élément de liaison 66 présente une forme en V avec son sommet tronqué.

Le revêtement d'émail et la rectification des portions d'extrémités 59,60 sont de préférence réalisés avant le pliage desdites épingles 57 ; on pourrait toutefois le faire après ce pliage, ce qui compliquerait cependant l'étape de rectification.

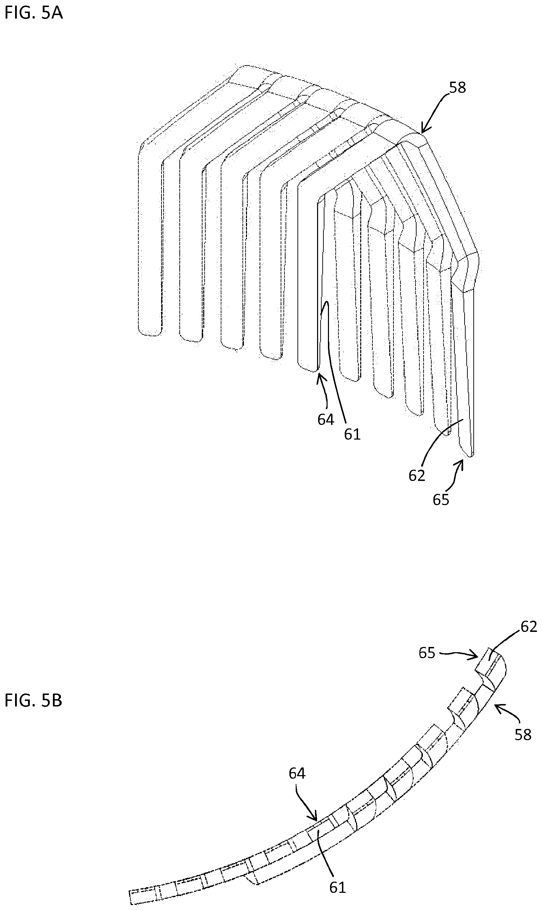

L'épingle 57 subit ensuite une étape de soyage des branches 64, 65 telle qu'illustrée en figure 18. Un tel soyage permet d'imbriquer les uns dans les autres, par chevauchement, les premiers segments conducteurs 19, ou les second segments conducteurs 25, sans modifier l'épaisseur des spires, comme le montre les figures 5A et 5B. Il en est de même pour les seconds segments conducteurs 25.

On peut également mettre en œuvre divers types de bobinage polyphasé au moyen de l'invention. Chaque phase peut en outre être constituée de plusieurs enroulements, chaque enroulement étant réalisé de la manière décrite précédemment. Par exemple chaque phase peut comprendre deux enroulements disposés par spires sur plusieurs couches, l'un à côté de l'autre dans les encoches 15.

On peut également prévoir des variantes de formes pour les encoches 15, autres que celles illustrées en figures 22 et 23.

Les premier et second chignons 34, 35 du bobinage 3 pourront être revêtus d'un vernis d'isolation en sorte de pallier à des dépassements éventuels des premières et secondes surfaces dénudées 23, 24, 29, 30 dans lesdits premier et second chignons 34, 35, ce qui permettra d'éviter tout dysfonctionnement et de répondre aux normes de fabrications.

La conception du stator 1 selon l'invention permet de concevoir tous les composants en amont, de pré-positionner tous les premiers segments conducteurs 19 et tous les seconds segments conducteurs 25 de chaque côté du corps 2. Cela permet un gain de temps de montage du stator 1.

Cette conception du stator 1 facilite en outre le recyclage du produit puisque le bobinage 3 peut facilement être démantelé une fois que les moyens de maintien en contact des premiers et seconds segments conducteurs 19, 25 sont neutralisés.

Le stator 1 selon l'invention sera mis en œuvre sur des machines électriques tournantes telles que des moteurs ou des générateurs. Une application particulière concerne la fabrication d'alternateur et d'alterno-démarreurs pour l'automobile. On peut également exploiter cette conception de stator pour les génératrices d'éoliennes.

## Revendications

1. Stator (1) de machine électrique tournante comprenant un corps (2) muni d'encoches (15) qui s'étendent radialement et de manière circonférentielle et qui sont séparées les unes des autres par des dents (16) et, un bobinage (3) polyphasé constitué de plusieurs enroulements (4, 5, 6, 7, 8) de spires disposés par couches (9, 10, 11, 12, 13, 14) dans les encoches, chaque enroulement comprenant, d'une part, des premiers segments conducteurs (19, 31) munis chacun d'une première tête de liaison (22) prolongée par deux premières branches (20, 21), chaque premier segment conducteur étant revêtu d'un isolant excepté la présence d'une première surface dénudée (23, 24) sur chacune des premières branches et, d'autre part, des seconds segments conducteurs (25, 32, 33) munis chacun d'une seconde tête de liaison (28) prolongée par deux secondes branches (26, 27), chaque second segment conducteur étant revêtu d'un isolant excepté la présence d'une seconde surface dénudée (29, 30) sur chacune des secondes branches, la forme de la première surface dénudée et la forme de la seconde surface dénudée étant complémentaires, chaque encoche recevant des premières branches et des secondes branches disposées en vis-à-vis avec leurs premières surfaces dénudées et leurs secondes surfaces dénudées respectivement en contact les unes contre les autres en sorte de constituer un fil conducteur continu, **caractérisé en ce que** le corps (2) du stator est constitué d'un élément monobloc et comprend des pieds-de-dents (17) agencés aux extrémités des dents (16), qui s'étendent de manière circonférentielle de chaque côté des dents, **en ce que** les premiers segments conducteurs et les seconds segments conducteurs sont disposés en quinconce et en sens inverse successivement les uns à la suite des autres, et **en ce que** ledit stator comprend des moyens de maintien (37, 38) agencés directement dans les encoches et configurés pour bloquer les mouvements relatifs entre les première et seconde branches attenantes dans le sens longitudinal de l'encoche en sorte de maintenir les premières et secondes surfaces dénudées en contact les unes contre les autres dans les encoches, sans aucune soudure entre les premières et secondes surfaces dénudées, les moyens de maintien exerçant une pression au niveau des surfaces de contact entre les premières et secondes surfaces dénudées.

2. Stator (1) selon la revendication 1, dans lequel les premières branches (20, 21) et les secondes branches (26, 27) comprennent chacune une section en coupe transversale de forme rectangulaire.

3. Stator (1) selon la revendication 2, dans lequel les première (23, 24) et seconde (29, 30) surfaces dénudées sont disposées en vis-à-vis et en contact dans le sens radial l'une par rapport à l'autre, lesdites surfaces dénudées s'étendant sur une longueur correspondant au moins à la longueur de l'encoche (15).

4. Stator (1) selon la revendication 3, dans lequel les premières (20, 21) et secondes (26, 27) branches ont une forme parallélépipédique, les première (23, 24) et seconde (29, 30) surfaces dénudées étant disposées sur les faces longitudinales en vis-à-vis desdites branches.

5. Stator (1) selon la revendication 3, dans lequel les premières (20, 21) et secondes (26, 27) branches ont une forme parallélépipédique munie d'un chanfrein ayant un angle d'inclinaison (α2), les première (23, 24) et seconde (29, 30) surfaces dénudées étant disposées sur les faces chanfreinées en vis-à-vis.

6. Stator (1) selon la revendication 3, dans lequel les premières (20, 21) et secondes (26, 27) branches ont une forme parallélépipédique munie d'un biseau ayant un angle d'inclinaison (α1), les première (23, 24) et seconde (29, 30) surfaces dénudées étant disposées sur les faces biseautées en vis-à-vis.

7. Stator (1) selon l'une des revendications 5 ou 6, dans lequel l'angle d'inclinaison (α1, α2) a une valeur maximale égale à 5 degrés.

8. Stator (1) selon l'une des revendications 4 à 7, dans lequel des moyens d'ancrage (39) sont agencés entre les première (23, 24) et seconde (29, 30) surfaces dénudées pour maintenir lesdites surfaces en contact l'une contre l'autre.

9. Stator (1) selon l'une des revendications 4 à 8, dans lequel les moyens de maintien comprennent des cales de pression (37, 38) disposées respectivement dans chaque encoche (15) et configurées pour exercer un effort dans le sens radial, contre les premières (20, 21) et secondes (26, 27) branches disposées dans chacune desdites encoches.

10. Stator (1) selon l'une des revendications 1 à 9, dans lequel les premiers (19, 31) et seconds (25, 32, 33) segments conducteurs présentent chacun un soyage entre leurs premières branches (20, 21), respectivement leurs secondes branches (26, 27).

11. Stator (1) selon l'une des revendications 1 à 10, dans lequel chaque enroulement du bobinage comprend un segment conducteur d'entrée de phase (40) qui comprend une branche d'entrée (41) revêtue d'un isolant excepté la présence d'une surface d'entrée dénudée (44), la branche d'entrée étant engagée dans une encoche (15), la surface d'entrée dénudée venant en contact avec la seconde surface dénudée (29) en vis-à-vis d'un second segment conducteur (32) de début de phase, les moyens de maintien (37, 38) étant configurés pour maintenir la surface d'entrée dénudée et la seconde surface dénudée en contact l'une contre l'autre.

12. Stator (1) selon l'une des revendications 1 à 11, lequel comprend au moins un segment conducteur de raccordement (45, 51) qui comprend des branches de raccordement (46, 53a, 53b), ledit segment conducteur de raccordement étant revêtu d'un isolant excepté les branches de raccordement qui comprennent chacune une surface de raccordement dénudée (47, 54, 55)), les surfaces de raccordement dénudées venant en contact avec les secondes surfaces dénudées (29, 30) de seconds segments conducteur (25, 33), les moyens de maintien (37, 38) étant configurés pour maintenir les surfaces de raccordement dénudées et les secondes surfaces dénudées en contact les unes contre les autres.

13. Procédé de fabrication d'un stator (1) de machine électrique tournante selon l'une des revendications 1 à 12, lequel consiste au moins :
- à insérer les premières branches (20, 21) des premiers segments conducteurs (19) dans un premier sens longitudinal du corps (2), à l'intérieur des encoches (15) ;
- à insérer les secondes branches (26, 27) des seconds segments conducteurs (25) dans un second sens longitudinal du corps, à l'intérieur des encoches ;
- à positionner en contact les premières surfaces dénudées (23, 24) avec les secondes surfaces dénudées (29, 30) respectives, disposées en vis-à-vis à l'intérieur des encoches ;
- à mettre en place les moyens de maintien (37, 38) directement dans l'encoche (15), lesdits moyens de maintien permettant de bloquer les mouvements relatifs entre les première et seconde branches attenantes dans le sens longitudinal de l'encoche en sorte de maintenir les premières et secondes surfaces dénudées en contact les unes contre les autres dans l'encoche (15), sans aucune soudure entre les premières et secondes surfaces dénudées, les moyens de maintien exerçant une pression au niveau des surfaces de contact entre les premières et secondes surfaces dénudées.

14. Procédé de fabrication d'un stator (1) selon la revendication 13, dans lequel les premiers (19) et seconds (25) segments conducteurs sont préalablement réalisés chacun en :
- constituant une épingle (58) dans une feuille de matière conductrice ;
- revêtant l'épingle d'un isolant ;
- dénudant les branches (59, 60) de l'épingle dans les zones correspondant aux surfaces dénudées (61, 62) en sorte de retirer l'isolant sur lesdites surfaces ;
- pliant l'épingle pour donner lui donner une forme en U avec ses deux branches.

15. Machine électrique tournante de type moteur ou générateur, comprenant un stator (1) selon l'une des revendications 1 à 12.

## Patentansprüche

1. Stator (1) einer drehenden elektrischen Maschine, umfassend einen Körper (2), der mit Einkerbungen (15) versehen ist, die sich radial und auf umfängliche Weise erstrecken, und die voneinander durch Zähne (16) getrennt sind, eine mehrphasige Spule (3), die aus mehreren Windungen (4, 5, 6, 7, 8) von Wicklungen besteht, die in Schichten (9, 10, 11, 12, 13, 14) in den Einkerbungen disponiert sind, wobei jede Windung einerseits erste Leitersegmente (19, 31) umfasst, die jeweils mit einem ersten Verbindungskopf (22) versehen sind, der durch erste zwei Verzweigungen (20, 21) fortgesetzt wird, wobei jedes erste Leitersegment mit einer Isolierung überzogen ist, mit Ausnahme des Vorhandenseins einer ersten offengelegten Oberfläche (23, 24) auf jeder der ersten Verzweigungen, andererseits zweite Leitersegmente (25, 32, 33) die jeweils mit einem zweiten Verbindungskopf (28) versehen sind, der durch zweite zwei Verzweigungen (26, 27) fortgesetzt wird, wobei jedes zweite Leitersegment mit einer Isolierung überzogen ist, mit Ausnahme des Vorhandenseins einer zweiten offengelegten Oberfläche (29, 30) auf jeder der zweiten Verzweigungen, wobei die Form der ersten offengelegten Oberfläche und die Form der zweiten offengelegten Oberfläche ergänzend sind, wobei jede Einkerbung erste Verzweigungen und zweite Verzweigungen aufnimmt, die mit ihren ersten offengelegten Oberflächen und ihren zweiten offengelegten Oberflächen jeweils in Kontakt miteinander gegenüber angeordnet sind, um einen durchgehenden Leitfaden zu bilden, **dadurch gekennzeichnet, dass** der Körper (2) des Stators aus einem einstückigen Element gebildet ist, und Zahnfüße (17) umfasst, die an den Enden der Zähne (16) angeordnet sind, die sich auf umfängliche Weise auf jeder Seite der Zähne erstrecken, dadurch, dass die ersten Leitersegmente und die zweiten Leitersegmente im schleppenden Verband und nacheinander in entgegengesetzter Richtung, eines nach dem anderen angeordnet sind, und dadurch, dass der Stator Haltemittel (37, 38) umfasst, die direkt in den Einkerbungen angeordnet sind, und konfiguriert sind, um die relativen Bewegungen zwischen den ersten und zweiten angrenzenden Verzweigungen in der Längsrichtung der Einkerbung zu blockieren, um die ersten und zweiten offengelegten Oberflächen in Kontakt aneinander in den Einkerbungen, ohne Schweißnaht zwischen den ersten und zweiten offengelegten Oberflächen zu halten, wobei die Haltemittel einen Druck im Bereich der Kontaktoberflächen zwischen den ersten und zweiten offengelegten Oberflächen ausüben.

2. Stator (1) nach Anspruch 1, wobei die ersten Verzweigungen (20, 21) und die zweiten Verzweigungen (26, 27) jeweils eine Querschnittsektion in rechteckiger Form umfassen.

3. Stator (1) nach Anspruch 2, wobei die ersten (23, 24) und zweiten (29, 30) offengelegten Oberflächen gegenüber und in Kontakt in der radialen Richtung zueinander disponiert sind, wobei sich die offengelegten Oberflächen über eine Länge erstrecken, die mindestens der Länge der Einkerbung (15) entspricht.

4. Stator (1) nach Anspruch 3, wobei die ersten (20, 21) und zweiten (26, 27) Verzweigungen eine quaderförmige Form aufweisen, wobei die ersten (23, 24) und zweiten (29, 30) offengelegten Oberflächen auf den Längsseiten gegenüber den Verzweigungen disponiert sind.

5. Stator (1) nach Anspruch 3, wobei die ersten (20, 21) und zweiten (26, 27) Verzweigungen eine quaderförmige Form aufweisen, die mit einer Fase versehen ist, die einen Neigungswinkel (α2) aufweist, wobei die ersten (23, 24) und zweiten (29, 30) offengelegten Oberflächen gegenüber an den angefasten Seiten disponiert sind.

6. Stator (1) nach Anspruch 3, wobei die ersten (20, 21) und zweiten (26, 27) Verzweigungen eine quaderförmige Form aufweisen, die mit einer Schräge versehen ist, die einen Neigungswinkel (α1) aufweist, wobei die ersten (23, 24) und zweiten (29, 30) offengelegten Oberflächen gegenüber an den abgeschrägten Seiten disponiert sind.

7. Stator (1) nach einem der Ansprüche 5 oder 6, wobei der Neigungswinkel (α1, α2) einen maximalen Wert gleich 5 Grad aufweist.

8. Stator (1) nach einem der Ansprüche 4 bis 7, wobei Verankerungsmittel (39) zwischen den ersten (23, 24) und zweiten (29, 30) offengelegten Oberflächen angeordnet sind, um die Oberflächen in Kontakt aneinander zu halten.

9. Stator (1) nach einem der Ansprüche 4 bis 8, wobei die Haltemittel Druckkeile (37, 38) umfassen, die jeweils in jeder Einkerbung (15) disponiert sind, und konfiguriert sind, um eine Kraft in der radialen Richtung auf die ersten (20, 21) und zweiten (26, 27) Verzweigungen auszuüben, die in jeder der Einkerbungen disponiert sind.

10. Stator (1) nach einem der Ansprüche 1 bis 9, wobei die ersten (19, 31) und zweiten (25, 32, 33) Leitersegmente jeweils einen Durchzug zwischen ihren ersten Verzweigungen (20, 21), beziehungsweise ihren zweiten Verzweigungen (26, 27) aufweisen.

11. Stator (1) nach einem der Ansprüche 1 bis 10, wobei jede Windung der Spule ein Phasenleitereingangssegment (40) umfasst, das eine Eingangsverzweigung (41) umfasst, die mit einer Isolierung überzogen ist, mit Ausnahme des Vorhandenseins einer ersten offengelegten Oberfläche (44), wobei die Eingangsverzweigung in eine Einkerbung (15) eingeführt ist, wobei die offengelegte Eingangsoberfläche in Kontakt mit der zweiten offengelegten Oberfläche (29) gegenüber einem zweiten Leitersegment (32) eines Phasenanfangs kommt, wobei die Haltemittel (37, 38) konfiguriert sind, um die offengelegte Eingangsoberfläche und die zweite offengelegte Oberfläche in Kontakt aneinander zu halten.

12. Stator (1) nach einem der Ansprüche 1 bis 11, welcher mindestens ein Anschlussleitersegment (45, 51) umfasst, welches Anschlussverzweigungen (46, 53a, 53b) umfasst, wobei das Anschlussleitersegment mit einer Isolierung überzogen ist, mit Ausnahme der Anschlussverzweigungen, die jeweils eine offengelegte Anschlussoberfläche (47, 54, 55) umfassen, wobei die offengelegten Anschlussoberflächen mit den zweiten offengelegten Oberflächen (29, 30) zweiter Leitersegmente (25, 33) in Kontakt kommen, wobei die Haltemittel (37, 38) konfiguriert sind, die offengelegten Anschlussoberflächen und die zweiten offengelegten Oberflächen in Kontakt aneinander zu halten.

13. Verfahren zur Herstellung eines Stators (1) einer drehenden elektrischen Maschine nach einem der Ansprüche 1 bis 12, mindestens bestehend aus:
- dem Einführen der ersten Verzweigungen (20, 21) der ersten Leitersegmente (19) in einer ersten Längsrichtung des Körpers (2), ins Innere der Einkerbungen (15);
- dem Einführen der zweiten Verzweigungen (26, 27) der zweiten Leitersegmente (25) einer zweiten Längsrichtung des Körpers, ins Innere der Einkerbungen;
- dem Positionieren in Kontakt der ersten offengelegten Oberflächen (23, 24) mit den jeweiligen zweiten offengelegten Oberflächen (29, 30), die gegenüber im Inneren der Einkerbungen angeordnet sind;
- dem Anbringen der Haltemittel (37, 38) direkt in der Einkerbung (15), wobei es die Haltemittel ermöglichen, die relativen Bewegungen zwischen den ersten und zweiten angrenzenden Verzweigungen in der Längsrichtung der Einkerbung zu blockieren, um die ersten und zweiten offengelegten Oberflächen in Kontakt aneinander in der Einkerbung (15) zu halten, ohne Schweißnaht der ersten und zweiten offengelegten Oberflächen, wobei die Haltemittel einen Druck im Bereich der Kontaktoberflächen zwischen den ersten und zweiten offengelegten Oberflächen ausüben.

14. Verfahren zur Herstellung eines Stators (1) nach Anspruch 13, wobei die ersten (19) und zweiten (25) Leitersegmente zuvor jeweils gefertigt werden durch:
- Bilden einer Nadel (58) in einer Folie aus leitfähigem Material;
- Überziehen der Nadel mit einer Isolierung;
- Offenlegen der Verzweigungen (59, 60) der Nadel in den Zonen entsprechend den offengelegten Oberflächen (61, 62), um die Isolierung auf den Oberflächen abzuziehen;
- Knicken der Nadel, um ihr eine Form in U mit seinen beiden Verzweigungen zu verleihen.

15. Drehende elektrische Maschine vom Typ Motor oder Generator, einen Stator (1) nach einem der Ansprüche 1 bis 12 umfassend.

## Claims

1. Stator (1) of a rotary electric machine comprising a body (2) provided with slots (15) that extend radially and circumferentially and that are separated between them by teeth (16) and, a polyphased coil (3) constituted of several windings (4, 5, 6, 7, 8) of turns arranged by layers (9, 10, 11, 12, 13, 14) in the slots, with each winding comprises, on the one hand, first conductive segments (19, 31) each provided with a first connector head (22) extended by two first branches (20, 21), with each first conductive segment being coated with insulation except the presence of a first bared surface (23, 24) on each one of the first branches and, on the other hand, second conductive segments (25, 32, 33) each provided with a second connector head (28) extended by two second branches (26, 27), with each second conductive segment being coated with insulation except the presence of a second bared surface (29, 30) on each one of the second branches, with the shape of the first bared surface and the shape of the second bared surface being complementary, with each slot accepting first branches and second branches positioned opposite with the first bared surfaces thereof and the second bared surfaces thereof respectively in contact with one another in such a way as to form a continuous conductive wire, **characterised in that** the body forms a single-block element, with each tooth (16) comprising at its end a tooth root (17) which extend circumferentially on either side of the said tooth, said first conductive segments and second conductive segments being arranged in a staggered configuration and in opposite directions successively one after the other, , said stator comprising means for maintaining (37, 38) arranged directly in the slots and configured to block the relative movements between the first and second adjacent branches in the longitudinal direction of the slot so as to maintain the first and second bared surfaces in contact with one another in the slots, without any welds between the first and second bared surfaces, the means for maintaining exerting a pressure on the contact surfaces between the first and second bared surfaces.

2. Stator (1) according to claim 1, wherein the first branches (20, 21) and the second branches (26, 27) each include a transversal cross-section of rectangular shape.

3. Stator (1) according to claim 2, wherein the first (23, 24) and second (29, 30) bared surfaces are arranged opposite and in contact in the radial direction in relation to one another, with said bared surfaces extending over a length that corresponds to at least the length of the slot (15).

4. Stator (1) according to claim 3, wherein the first (20, 21) and second (26, 27) branches have a parallelepiped shape, with the first (23, 24) and second (29, 30) bared surfaces being arranged on the longitudinal faces opposite said branches.

5. Stator (1) according to claim 3, wherein the first (20, 21) and second (26, 27) branches have a parallelepiped shape provided with a chamfer that has an angle of inclination (α2), with the first (23, 24) and second (29, 30) bared surfaces being arranged on the chamfered faces opposite.

6. Stator (1) according to claim 3, wherein the first (20, 21) and second (26, 27) branches have a parallelepiped shape provided with a bevel that has an angle of inclination (α1), with the first (23, 24) and second (29, 30) bared surfaces being arranged on the bevelled faces opposite.

7. Stator (1) according to one of claims 5 or 6, wherein the angle of inclination (α1, α2) has a maximum value equal to 5 degrees.

8. Stator (1) according to one of claims 4 to 7, wherein anchoring means (39) are arranged between the first (23, 24) and second (29, 30) bared surfaces in order to maintain said surfaces in contact with one another.

9. Stator (1) according to one of claims 4 to 8, wherein the means for maintaining include pressure shims (37, 38) arranged respectively in each slot (15) and configured to exert a force in the radial direction, against the first (20, 21) and second (26, 27) branches arranged in each one of said slots.

10. Stator (1) according to one of claims 1 to 9, wherein the first (19, 31) and second (25, 32, 33) conductive segments each have a plunging between the first branches thereof (20, 21), respectively the second branches thereof (26, 27).

11. Stator (1) according to one of claims 1 to 10, wherein each winding of the coil comprises a phase input conductive segment (40) which comprises an input branch (41) coated with insulation except the presence of a bared input surface (44), with the input branch being engaged into a slot (15), with the bared input surface coming into contact with the second bared surface (29) opposite a second conductive segment (32) at the beginning of the phase, with the means for maintaining (37, 38) being configured to maintain the bared input surface and the second bared surface in contact with each other.

12. Stator (1) according to one of claims 1 to 11, which comprises at least one conductive connection segment (45, 51) which comprises connection branches (46, 53a, 53b), said conductive connection segment being coated with insulation except the connection branches which each comprise a bared connection surface (47, 54, 55), with the bared connection surfaces coming into contact with the second bared surfaces (29, 30) of second conductive segments (25, 33), with the means for maintaining (37, 38) being configured to maintain the bared connection surfaces and the second bared surfaces in contact with one another.

13. Method for manufacturing a stator (1) of a rotary electric machine according to one of claims 1 to 12, which consists at least:
- in inserting the first branches (20, 21) of the first conductive segments (19) in a first longitudinal direction of the body (2), inside the slots (15);
- in inserting the second branches (26, 27) of the second conductive segments (25) in a second longitudinal direction of the body, inside the slots;
- in positioning in contact the first bared surfaces (23, 24) with the respective second bared surfaces (29, 30), arranged opposite inside the slots;
- in setting in place the means for maintaining (37, 38) directly in the slots, making it possible to block the relative movements between the first and second adjacent branches in the longitudinal direction of the slot so as to maintain said first and second bared surfaces in contact with one another in the slots, without any welds between the first and second bared surfaces, the means for maintaining exerting a pressure on the contact surfaces between the first and second bared surfaces.

14. Method for manufacturing a stator (1) according to claim 13, wherein the first (19) and second (25) conductive segments are each carried out beforehand by:
- constituting a pin (58) in a sheet of conductive material;
- coating the pin with insulation;
- baring the branches (59, 60) of the pin in the zones that correspond to the bared surfaces (61, 62) in such a way as to remove the insulation on said surfaces;
- folding the pin in order to give it the shape of a U with the two branches thereof.

15. Rotary electric machine of the motor or generator type, comprising a stator (1) according to one of claims 1 to 12.
